# EUROPÄISCHE PATENTSCHRIFT

(11) **EP 1 842 202 B1**
(45) Veröffentlichungstag und Bekanntmachung des Hinweises auf die Patenterteilung: **25.05.2011**
(21) Anmeldenummer: 06700567.8
(22) Anmeldetag: 19.01.2006
(51) Int. Cl.: G11B 33/02, B65D 85/00, G11C 5/00, G06K 19/02, H05K 5/02

(54) **HÜLLE FÜR SPEICHERKARTEN**
CASE FOR MEMORY CARDS
EMBALLAGE POUR CARTES MEMOIRES

(30) Priorität: 28.01.2005 CH 130052005
(43) Veröffentlichungstag der Anmeldung: 10.10.2007
(73) Patentinhaber: Workplace GmbH, 8041 Zürich (CH)
(72) Erfinder: HOCHULI, Martin, CH-Oberwil-Lieli (CH)
(74) Vertreter: Schneider Feldmann AG Patent- und Markenanwälte
(86) Internationale Anmeldenummer: PCT/CH2006/000041
(87) Internationale Veröffentlichungsnummer: WO 2006/079235

(56) Entgegenhaltungen:
- EP-A- 0 367 325
- EP-A- 1 153 851
- JP-A- 2001 175 821
- US-A1- 2003 189 101
- US-B1- 6 275 383
- US-B1- 6 443 306
- US-B1- 6 839 239
- PATENT ABSTRACTS OF JAPAN Bd. 2000, Nr. 20, 10. Juli 2001 (2001-07-10) -& JP 2001 067442 A (SATO KENJI), 16. März 2001 (2001-03-16)

## Beschreibung

### Technisches Gebiet

Die Erfindung betrifft eine Hülle für im Wesentlichen rechteckige Speicherkarten, welche zur Langzeit-Datenarchivierung geeignet sind, wobei jeweils mindestens 3 Speicherkarten in der Hülle vibrationsfest, schonend und geschützt untergebracht werden können.

### Stand der Technik

Die Art der Speichermedien hat sich in den letzten Jahrzehnten ständig verändert. Vinyl-Platten und Tonbandkassetten für Musik waren lange Zeit der Standard, bis die CD die Vinyl-Platten ablöste. Als der MP3-Player den Walkman ersetzte, wurden Tonbandkassetten durch Speicherkarten ersetzt. Die DVD, mit denselben Abmessungen wie eine CD aber einem Vielfachen der Speicherkapazität, wurde beispielsweise zum Standardformat für Speicher von Kinofilmen und ersetzt heute die Videokassette, und Disketten wurden längst durch Speicherkarten ersetzt. Der Vorteil solcher Speicherkarten ist, dass sie für alle Medien und Datenträger verwendet werden können.

Eine Vielzahl von Speicherkarten werden heutzutage mit immer grösseren Speicherkapazitäten zu immer günstigeren Preisen angeboten. Ihre Hauptanwendungen sind heute beispielsweise in mobilen Telefonen, Digitalkameras und MP3-Playern und werden zunehmend zum Speichern und Übertragen von Daten, meistens in Form eines Memorysticks, verwendet. Speicherkapazitäten erhöhten sich rasch von 1 MB auf 2 GB, die 5GB SD Karte wird bis Mitte 2005 auf dem Markt erwartet, die 8GB Compact Flash Karte ist heute bereits verfügbar. Durch den Preiszerfall ist zu erwarten, dass die Speicherkarten in Zukunft an Bedeutung gewinnen und in weiteren Anwendungsbereichten eingesetzt werden, beispielsweise zur Langzeitarchivierung von Daten, Fotos, Filmen und Musik. Dies bedeutet, dass eine beschriebene Karte oftmals nicht mehr überschrieben wird sondern archiviert wird. Dadurch können beispielsweise Musikstücke von verschiedenen Stilrichtungen oder Interpreten, Ferienfotos eines Jahres oder Arbeitsergebnisse eines Projektes gesondert aufbewahrt werden. Somit werden die Festplatten in den Computern entlastet und beim Unterlassen eines Backups wird das Risiko eines Datenverlusts verringert. Zudem haben die Speicherkarten, im Gegensatz zu den gebrannten CDs mit einer Halbwertszeit von 10 Jahren, unbegrenzte Haltbarkeit und eignen sich wie Mikrofilme zur Langzeit Datenarchivierung und für den Daten-Backup im professionellen Bereich. Speicherkarten enthalten, im Gegensatz zu CDs oder Disketten, keine beweglichen Teile sind daher einer geringeren mechanischen Abnützung unterworfen. Ihre schwächste Stellen sind die Lötstellen zu den Kontaktstellen.

Heute ist eine Vielzahl von Speicherkarten auf dem Markt, welche alle im Wesentlichen rechteckig sind, wobei in der Regel eine fehlende Ecke oder eine andere Aussparung an einer gewissen Stelle die Orientierung der Speicherkarte eindeutig festlegt. Dadurch kann leicht die zur Einführung in ein Gerät vorgeschriebene Richtung identifiziert werden. Die folgende Tabelle gibt eine Übersicht einer Auswahl der heute vielfach verwendete Speicherkarten mit ihren Kurzbezeichnungen und ihren Abmessungen an.

| **Speicherkartenname** | **Abkürzung** | **Abmessung in mm (Länge x Breite x Dicke)** |
|---|---|---|
| Secure Digital Card | SD | 24 x 32 x 2.1 |
| Mini-SD | MINI-SD | 21.5 x 20 x 1.4 |
| Multi Media Card | MMC | 24 x 32 x 1.4 |
| Reduces-Sized MMC | RS-MMC | 24 x 18 x 1.4 |
| MMC-Mobile | MMC-Mobile | 24 x 18 x 1.4 |
| Compact Flash | CF | 36.4 x 42.8 x 3.2 |
| Smart Media Card | SM | 45 x 37 x 0.76 |
| Xtrem Digital (Olympus) | XD | 20 x 25 x 1,7 |
| Memory-Stick pro | MS | 22 x 50 x 2.1 |

Diese Liste enthält die heute gängigsten Modelle und ist nicht abschliessend. Neue Standards werden unter anderem von der MultiMediaCard Association (www.mmca.org) oder der SDCard Association (www.sdcard.org) festgelegt. Es ist aber zu erwarten, dass andere und neue Speicherkarten im Wesentlichen dieselben Grössenordnungen aufweisen wie die bisher bekannten. Die vorliegende Erfindung bezieht sich auf alle im Wesentlichen rechteckige Speicherkarten, welche zur Langzeit-Datenarchivierung geeignet sind, also auch auf neue Karten mit anderen Massen, die erst noch auf den Markt kommen.

Da für die Archivierung eine wachsende Anzahl von solchen Speicherkarten versorgt, archiviert und für den Transport rüttelfest und vor Schmutz geschützt untergebracht werden müssen, braucht es geeignete Behältnisse dazu. Andererseits ist es für die Konsumenten ärgerlich, sich ständig neue Archivierungshüllen besorgen zu müssen. Vor allem im mobilen Bereich, beispielsweise in Fahrzeugen, gehören genormte Vorrichtungen im Cockpitbereich zum Versorgen von CDs und CD Hüllen längst zur Grundausstattung. Eine Änderung auf ein neues Format dauert somit in der Regel mindestens eine Fahrzeuggeneration.

Bekannt sind aus der US 6839239 und aus der EP 1153851 jeweils eine Hülle für eine CD, bei der neben der CD zusätzlich eine oder zwei Speicherkarten untergebracht werden können.

In der US 6275383, auch bekannt als EP 0980073 und als DE 19835961, wird eine Hülle für vier Speicherkarten beschrieben, die ihrerseits mit identischen Hüllen zusammen geclipst werden kann. Insbesondere kann die Hülle Länge und Breite von Kreditkarten aufweisen, um bequemer beispielsweise in Brieftaschen, Mappen oder Koffern transportiert werden zu können. Nachteilig an dieser Anordnung ist, dass diese Hüllen oder die Hüllenblöcke irgendwo untergebracht werden müssen, da sich für Kreditkarten als Langzeit-Datenarchivierungsträger keine geeigneten Behältnisse durchgesetzt haben.

In der JP 2001067442 sowie in der US 2003 0189101 werden Hüllen für jeweils eine Karte oder Speicherkarte beschrieben, wobei in der japanischen Schrift die Hüllen mit einem Schlüsselring zusammengehalten werden und in der US Schrift die Hüllen mit einem Stecksystem zu einem Block zusammengehalten werden können.

In der EP 0367325 wird eine Hülle beschrieben, welche jeweils eine Karte in der Grösse einer Kreditkarte aufnehmen können.

All diese Hüllen verlangen vom Benutzer, dass er sich an neue Formate gewöhnen muss, für die er erneut nach einer geeigneten Aufbewahrung suchen muss.

Bekannt ist aus der JP 2001175821 und eine Hülle mit Speicherkarten in Form einer CD, wobei die Speicherkarten seitlich am Rand in Führungsrillen eingeschoben werden. Dafür weist die Hülle im leeren Zustand eine sternförmige Form auf mit Aussparungen in Form von Speicherkarten. Im gefüllten Zustand ist die Form schliesslich ähnlich einer CD und kann bequem in einem normierten CD- Behälter untergebracht werden. Nachteilig an dieser Anordnung ist allerdings, dass die Speicherkarten leicht aus der Hülle herausrutschen können, da der sehr dünne Randbereich kaum gut gehalten werden kann. Sobald die volle Hülle aus dem sicheren CD- Behälter entnommen wird, um eine Speicherkarte zu entnehmen, drohen die anderen herauszurutschen und verloren zu gehen. Zudem sind die Kontaktstellen nur minimal geschützt. Dieses Dokument dient zur Abgrenzung des Anspruch 1.

Aus der US 6443306 ist eine CD-Hülle bekannt, welche im Deckel Aussparungen aufweist, welche geeignet sind, um Speicherkarten darin einzulegen. Um die Speicherkarten zu entnehmen, muss mit einem Finger in eine kleine Aussparung neben der Speicherkarte gegriffen werden um den Rand der Speicherkarte anzuheben. Da die Karten sehr klein sind, ist die Entnahme für Benutzer mit grösseren Fingern sehr umständlich.

### Darstellung der Erfindung

Aufgabe der vorliegenden Erfindung ist es, eine Hülle für Speicherkarten eingangs angegebener Art zu beschreiben, wobei die Hülle die Form einer CD aufweisen soll, für welche bereits standardisierte Behälter verbreitet sind, in der Art, dass die Speicherkarten gut geschützt und gesichert sind und nicht ungewollt aus der CD Hülle herausfallen können und dennoch schnell und handlich entnommen werden können.

Die Aufgabe wird dadurch gelöst, dass die Hülle in Form einer CD aus einem oberen und einem unteren Teil bestehen, wobei Speicherkarten, insbesondere der Bereich der Kontaktierungen, zwischen diesen Teilen geschützt untergebracht werden können.

### Kurze Beschreibung der Zeichnungen

Die Erfindung wird unter Mithilfe der Zeichnungen näher beschrieben. Es zeigen
- Fig. 1a-c: perspektivische Ansichten einer zweiteiligen Hülle zum Einschieben von Speicherkarten;
- Fig. 2a-c: perspektivische Ansichten einer zweiteiligen Hülle mit Klemmelementen;
- Fig. 3a und b: perspektivische Ansichten einer zweiteiligen Hülle zum Einklemmen von Speicherkarten von schräg oben (a) sowie das obere Teil alleine von schräg unten (b);
- Fig. 3c-e: Querschnittsansichten eines oberen Teiles ge- mäss Fig. 5a in verschiedenen Ausführungsfor- men.

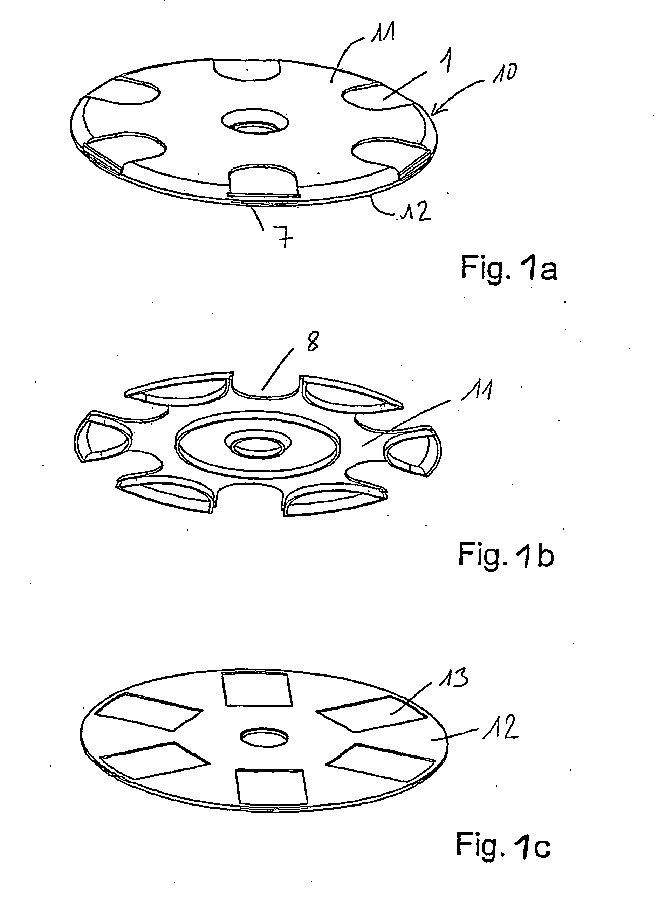

Fig. 1a zeigt eine zweiteilige Ausführungsform 10, wobei ein oberes Teil 11 in Fig. 1b und ein unteres Teil 12 in Fig. 1c abgebildet ist. Diese beiden Teile können mittig zusammengebracht werden. Diese zweiteilige Hülle 10 kann in eine CD-Hülle von 10 mm Dicke eingeklipst werden oder ist als Objekt alleine zu gebrauchen. Die Formate für die Speicherkarten können variieren. Das obere Teil 11 weist an seinem äusseren Rand mehrere definierte Aussparungen 8 auf, während das untere Teil gegenüber jeder Aussparung 8 eine Mulde 13 aufweist. Dadurch erfährt eine Speicherkarte 1 in der Mitte keinen Druck und ist schonend aufbewahrt. Das obere Teil 11 weist an den Rändern der Aussparungen 8 Führungen auf, in denen die Speicherkarten geklemmt sind.

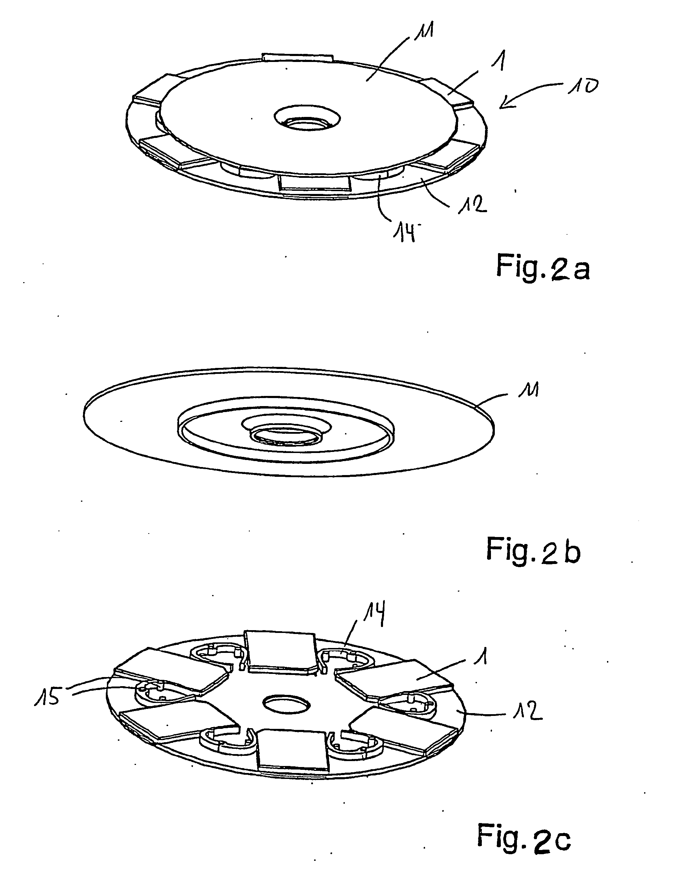

Fig. 2a bis c zeigt eine Alternativausführung der Figuren 1, wobei zwischen dem unteren Teil 11 und dem oberen Teil 12 Federn 14 in einem Kreis angeordnet angebracht sind, welche den Speicherkarten, die zwischen zwei Federn 14 eingeschoben werden können, seitlichen Halt verschaffen. Das untere Teil 12 kann vorzugsweise mit Vorrichtungen 15 versehen sein, Federn 14 verschiedener Grösse anzubringen.

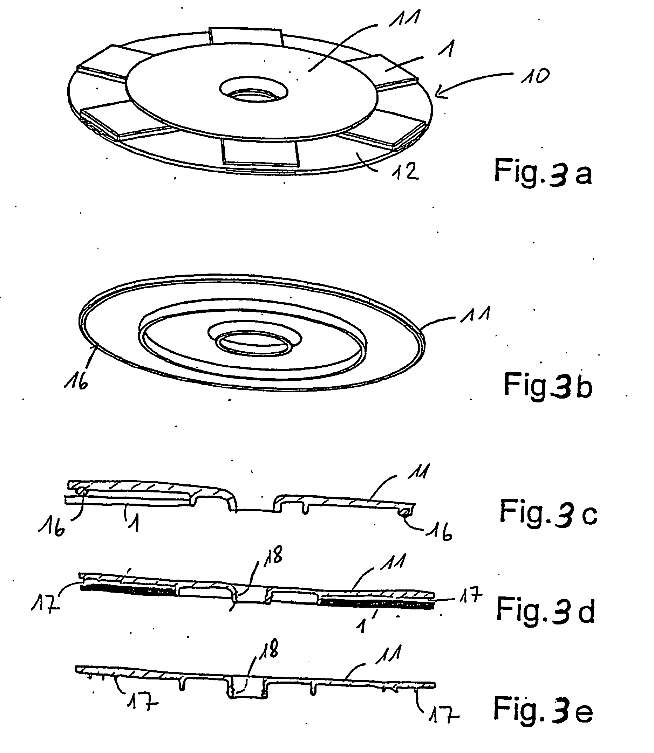

Fig. 3a und b zeigen eine weitere Ausführungsform einer erfindungsgemässen Hülle 10, bestehend aus im wesentlichen zwei Teilen. Bei dieser Ausführungsform werden Speicherkarten 1 zwischen das untere Teil 11 und das obere Teil 12 geklemmt, welches in Fig. 3b dargestellt ist. Am äusseren Rand dieses oberen Teiles 11 ist ein Halterungsring 16 angebracht, vorzugsweise aus Gummi. Dieser Halterungsring 16 kann eine Speicherkarte 1, die zwischen das obere Teil 11 und das untere Teil 12 geschoben wird, festklemmen und halten. Fig. 3c zeigt im Profil des oberen Teiles 11 einen solchen Ring.

Alternative Ausführungsformen der Klemmvorrichtung sind in Fig. 3d und 3e angegeben. An Stelle des Halterungsring 16 sind eine oder mehrere ringförmige Anordnungen von flexiblen Lamellen 17 dargestellt, welche ebenfalls Speichermedien 1 festhalten können. Diese Lamellen 17 können Formen von langgezogenen Bändern oder von Noppen sein. Beim Zusammenbringen des oberen Teils 11 mit dem unteren Teil 12 durch Zusammenklipsen einer entsprechenden Vorrichtung in der Mitte der Hülle kann durch einen entsprechenden zweistufigen Klip 18 die verwendbare Dicke der Speicherkarten eingestellt werden. Somit kann diese Vorrichtung für verschiedene Speicherkarten 1 verwendet werden, denn diese Vorrichtung schreibt keine Breite der Speicherkarte 1 vor.

### Bezugszeichenliste

- 1: Speicherkarte
- 7: Öffnungsschlitze
- 8: Aussparung
- 10: Zweiteilige Hülle
- 11: Oberes Teil
- 12: Unteres Teil
- 14: Feder
- 15: Vorrichtung zum Anbringen einer Feder
- 16: Halterungsring
- 17: Lamelle
- 18: Zweistufiger Klip

## Patentansprüche

1. Hülle für im Wesentlichen rechteckige Speicherkarten (1), welche zur Langzeit-Datenarchivierung geeignet sind, wobei jeweils mindestens drei Speicherkarten in der Hülle vibrationsfest und geschützt untergebracht werden können, wobei die Hülle die Form einer CD aufweist, für welche bereits standardisierte Behälter verbreitet sind **dadurch gekennzeichnet, dass** die Hülle (10) aus zwei zusammengebrachten Teilen, einem oberen Teil (11) und einem unteren Teil (12) besteht, zwischen denen die Speicherkarten (1) untergebracht sind.

2. Hülle nach Anspruch 1, **dadurch gekennzeichnet, dass** das obere Teil (11) an seinem äusseren Rand mehrere definierte Aussparungen (8) aufweist, und das untere Teil (12) gegenüber jeder Aussparung (8) eine Mulde (13) aufweist.

3. Hülle nach Anspruch 1, **dadurch gekennzeichnet, dass** die Hülle eine oder mehrere Federn (14) aufweist, welche zwischen dem oberen (11) und dem unteren Teil (12) angeordnet sind, wobei die Federn (14) gleichmässig auf einer Kreisfläche angeordnet sind und Speicherkarten (1), welche jeweils zwischen zwei Federn (14) eingefügt werden können, seitlichen Halt verleihen.

4. Hülle nach Anspruch 3, **dadurch gekennzeichnet, dass** das untere Teil (12) mit Vorrichtungen (15) versehen ist, Federn (14) verschiedener Grösse anzubringen.

5. Hülle nach Anspruch 1, **dadurch gekennzeichnet, dass** verschiedene Dicken von Speichermedien (1) fixiert werden können.

6. Hülle nach Anspruch 1 oder 5, **dadurch gekennzeichnet, dass** das obere Teil (11) an seiner unteren Seite am äusseren Rand einen Halterungsring (16), beispielweise aus Gummi, aufweist, welcher eine Speicherkarte (1), die zwischen das obere (11) und das untere Teil (12) geschoben ist, halten kann.

7. Hülle nach Anspruch 1 oder 5, **dadurch gekennzeichnet, dass** das obere Teil (11) an seiner unteren Seite mehrere konzentrisch angeordnete flexible Lamellen (17) aufweist, welche eine Speicherkarte, die zwischen das obere (11) und das untere Teil (12) geschoben ist, halten können.

8. Hülle nach einem der Ansprüche 1 bis 7, **dadurch gekennzeichnet, dass** das obere Teil (11) im Zentrum mit einen zweistufigen Klips (18) zum unteren Teil (12) in verschiedenen Höhen angeclipst werden kann.

9. Hülle nach einem der vorhergehenden Ansprüche, **dadurch gekennzeichnet, dass** die Speicherkarte (1) eine Secure Digital Card, eine Compact Flash Card, eine Multi Media Card, ein Memorystick, eine xD-Digital Card oder eine Smart Media Card ist.

## Claims

1. Case for essentially rectangular memory cards (1) suitable for long-term data archiving, wherein at least three memory cards, respectively, can be accommodated in the case in a vibration-proof and protected manner, wherein the case has the form of a CD, for which already standardised containers are available, **characterised in that** the case (10) consists of two brought-together parts, an upper part (11) and a lower part (12), between which the memory cards (1) are accommodated.

2. Case according to claim 1, **characterised in that** the upper part (11) comprises several defined recesses (8) on its outer rim and **in that** the lower part (12) comprises a well (13) opposite each recess (8).

3. Case according to claim 1, **characterised in that** the case comprises one or several springs (14) arranged between the upper (11) and the lower part (12), wherein the springs (14) are arranged evenly over a circular area and impart a lateral hold to memory cards (1), which may be inserted, respectively, between two springs (14).

4. Case according to claim 3, **characterised in that** the lower part (12) is provided with devices (15) for attaching springs (14) of various sizes.

5. Case according to claim 1, **characterised in that** different thicknesses of storage media (1) can be fixed.

6. Case according to claim 1 or 5, **characterised in that** the upper part (11), on its underside on the outer rim, comprises a retaining ring (16) made for example from rubber, which ring is able to retain a memory card (1) pushed in between the upper (11) and the lower part (12).

7. Case according to claim 1 or 5, **characterised in that** the upper part (11), on its underside, comprises several concentrically arranged flexible lamellae (17) able to retain a memory card which is pushed in between the upper (11) and the lower part (12).

8. Case according to one of claims 1 to 7, **characterised in that** the upper part (11), in the centre, can be clipped using a two-stage clip (18) onto the lower part (12) in various heights.

9. Case according to one of the preceding claims, **characterised in that** the memory card (1) is a secure digital card, a compact flash card, a multi media card, a memory stick, an xD digital card or a smart media card.

## Revendications

1. Enveloppe pour cartes mémoire (1) essentiellement rectangulaires, qui sont appropriées pour l'archivage de longue durée de données, dans laquelle respectivement au moins trois cartes mémoire peuvent être logées dans l'enveloppe de manière résistante aux vibrations et protégée, dans laquelle l'enveloppe présente la forme d'un CD, pour lequel des contenants déjà standardisés sont diffusés, **caractérisée en ce que** l'enveloppe (10) est constituée de deux parties assemblées, une partie supérieure (11) et une partie inférieure (12), entre lesquelles les cartes mémoire (1) sont logées.

2. Enveloppe selon la revendication 1, **caractérisée en ce que** la partie supérieure (1) présente sur son bord extérieur plusieurs cavités (8) définies, et la partie inférieure (12) présente un creux (13) en vis-à-vis de chaque cavité (8).

3. Enveloppe selon la revendication 1, **caractérisée en ce que** l'enveloppe présente un ou plusieurs ressorts (14), qui sont disposés entre la partie supérieure (11) et la partie inférieure (12), dans laquelle les ressorts (14) sont disposés uniformément sur une surface circulaire et les cartes mémoire (1), qui peuvent respectivement être insérées entre deux ressorts (14), confèrent un arrêt latéral.

4. Enveloppe selon la revendication 3, **caractérisée en ce que** la partie inférieure (12) est pourvue de dispositifs (15) pour monter des ressorts (14) de taille différente.

5. Enveloppe selon la revendication 1, **caractérisée en ce que** différentes épaisseurs de supports de mémorisation (1) peuvent être fixées.

6. Enveloppe selon la revendication 1 ou 5, **caractérisée en ce que** la partie supérieure (11) présente sur son côté inférieur sur le bord extérieur une bague de fixation (16), par exemple en caoutchouc, qui peut soutenir une carte mémoire (1), qui est glissée entre la partie supérieure (11) et la partie inférieure (12).

7. Enveloppe selon la revendication 1 ou 5, **caractérisée en ce que** la partie supérieure (11) présente sur son côté inférieur plusieurs lamelles (17) flexibles disposées concentriquement, qui peuvent soutenir une carte mémoire, qui est glissée entre la partie supérieure (11) et la partie inférieure (12).

8. Enveloppe selon une des revendications 1 à 7, **caractérisée en ce que** la partie inférieure (11) peut être clipsée au centre avec un clip (18) à deux étages sur la partie inférieure (12) à différentes hauteurs.

9. Enveloppe selon une des revendications précédentes, **caractérisée en ce que** la carte mémoire (1) est une carte Secure Digital, une carte compact Flash, une carte Multi Média, une carte Memorystick, une carte xD-Digital ou une carte Smart Media.
